# EUROPEAN PATENT APPLICATION

(11) **EP 2 199 840 A1**
(43) Date of publication of application: **23.06.2010**
(21) Application number: 09177911.6
(22) Date of filing: 03.12.2009
(51) Int. Cl.: G02B 6/245, G02B 6/25

(54) **Arrangement for processing optical waveguides**

(30) Priority: 19.12.2008 DE 202008016860 U
(71) Applicant: CCS Technology, Inc., Wilmington, DE 19803 (US)
(72) Inventor: Kossat, Rainer, 83229, Aschau (DE)
(74) Representative: Epping, Wilhelm

(57) **Abstract**

An arrangement for processing at least one optical waveguide comprises a first station (110) for processing the at least one optical waveguide (101). The assembly further comprises at least one second station (120) for processing the at least one optical waveguide (101). The first (110) and the at least one second station (120) comprise a common base (102) and a common actuator (103) for simultaneously actuating the first (110) and the at least one second (120) station. The actuator (103) is movable with respect to the base (102).
The first station (110) and the at least one second station (120) each comprises one of the following stations:
- a stripping apparatus for removing an outer coating (108) of a section of the at least one optical waveguide (101),
- a cleaning apparatus for cleaning the section of the at least one optical waveguide (101),
- a cleaving apparatus for cleaving the at least one optical waveguide (101).

## Description

The invention relates to an arrangement for processing at least one optical waveguide.

In the technical field of connecting optical waveguides, an assembler is often faced with the problem that his workplace comprises limited possibilities to deposit devices, for example strippers or cleaving devices for optical fibres. Furthermore, a plurality of devices is required which are used alternately.

It is desirable to provide an arrangement for processing at least one optical waveguide which is easy to operate.

According to an embodiment an arrangement for processing at least one optical waveguide comprises a first station for processing the at least one optical waveguide. The arrangement furthermore comprises at least one second station for processing the at least one optical waveguide. The first station and the at least one second station have a common base. The first station and the at least one second station comprise a common actuator for simultaneously actuating the first station and the at least one second station. The common actuator is movable relative to the base.

In an embodiment, the base comprises at least one guide device for the at least one optical waveguide and a blade for removing an outer coating of a section of the at least one optical waveguide. The base can have a cleaning element for cleaning the at least one optical waveguide.

In an embodiment, the base comprises a cleaving element for cleaving the at least one optical waveguide. The cleaving element may comprise a cleaving blade.

The first station and the at least one second station may each comprise one of the following stations: a stripping apparatus for removing an outer coating of a section of the at least one optical waveguide, a cleaning apparatus for cleaning the section of the at least one optical waveguide, a cleaving apparatus for cleaving the at least one optical waveguide.

In an embodiment, the first station comprises a lever, which is capable of moving rotatably about an axis relative to the base. The second station may comprise a further lever, which is capable of moving rotatably about the axis relative to the base. The axis is fixed relative to the base.

The lever and the further lever may be coupled to the common actuator such that a movement of the common actuator relative to the base causes an uniform movement of the lever and the further lever relative to the base. The longitudinal direction of the lever and the longitudinal direction of the further lever may be in the same direction.

In an embodiment, the base comprises a plurality of hinges. The lever and the further lever may be coupled to the base in each case via at least two hinges of the plurality of hinges. The axis runs through the plurality of hinges. The axis runs along the longitudinal direction of the at least one optical waveguide.

In an embodiment, the arrangement comprises a waste container for holding at least one cleaved part of the at least one optical waveguide. The waste container can be coupled to the base.

The arrangement can comprise a mechanism for transporting the at least one cleaved part into the waste container.

In an embodiment, the arrangement comprises a further actuator for actuating the mechanism for transporting the at least one cleaved part. The further actuator may be coupled to the actuator.

In an embodiment, the arrangement comprises at least one third station for processing optical waveguides. The first station, the at least one second station and at least one third station may comprise the common base. The common actuator for simultaneously actuating the first station, the at least one second station and the at least one third station couples the first station, the at least one second station and the at least one third station for simultaneously actuating the first station, the at least one second station and at least one third station. The first station may comprise a stripping apparatus. The second station may comprise a cleaning apparatus, and the third station a cleaving apparatus. The stripping apparatus, the cleaning apparatus and the cleaving apparatus may be actuated jointly by the actuator.

Herein below the embodiments will be described in more detail in conjunction with the appended drawings.
- Figure 1: schematically shows an arrangement for processing at least one optical waveguide in accordance with one embodiment,
- Figure 2: schematically shows an arrangement for processing at least one optical waveguide in accordance with a further embodiment.

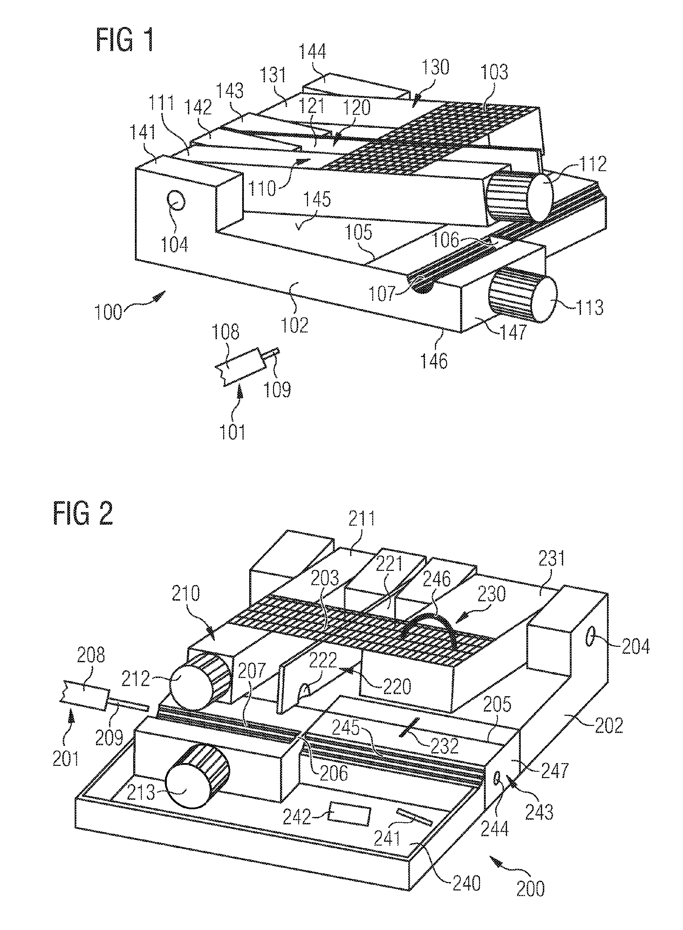

Figure 1 shows an arrangement 100 for processing at least one optical waveguide 101. The arrangement 100 comprises a base 102. The arrangement 100 comprises a first station 110 and a second station 120. Furthermore, the arrangement 100 comprises a third station 130. The stations 110, 120 and 130 are designed for processing the optical waveguide 101.

The base 102 comprises, in one region, a plurality of hinges 141, 142, 143 and 144. In a region opposite the region with the hinges, the base 102 comprises a guide device, in particular a groove 107. The guide device, in particular the groove 107, is designed to align the at least one optical waveguide relative to the base. A groove 105 runs substantially parallel to the groove 107. The groove 105 and the groove 107 enter the base 102 from a surface 145. The hinges 141 to 144 are likewise arranged on the surface 145. The base 102 can be positioned with an underside 146 on a substrate.

The optical waveguide 101 comprises a core 109 in the centre, in which core light can be guided. The core 109 is surrounded by a material with a lower refractive index than the core 109. This material forms a coating 108 around the core 109. The groove 107 enters the base 102 approximately in the form of a semicircle. The groove 107 forms a cutout, which is at least so deep and wide that part of the optical waveguide, in terms of length, can be laid in the groove 107, in particular with the coating 108. In one embodiment, the diameter of the groove 107 corresponds substantially to the outer diameter of the coating 108. The width and depth of the groove 107 is at least as large as the diameter of the coating 108.

A blade 106 is arranged on the base 102 transversely with respect to the groove 107. The blade is designed to cut into the coating 108 of the optical waveguide 101. The groove 107 is designed to align the at least one optical waveguide relative to the blade 106. The blade is designed to cut into the coating 108 of the optical waveguide 101 as far as the core 109, without damaging the core 109. In the exemplary embodiment shown, the blade 106 terminates with the surface 145 of the base 102. The blade 106 comprises a notch, with the result that the coating 108 of the optical waveguide 109 can be cut into and the core 109 is then arranged in the notch and is not damaged by the blade 106.

The base 102 comprises a cleaning element 113 on a front side 147. The front side 147 is aligned transversely with respect to the surface 145. The front side 147 of the base 102 is on that side of the base 102 which faces away from the hinges 141 to 144. In the exemplary embodiment shown, the cleaning element 113 is cylindrical. The cleaning element 113 can be coupled to the base 102 so as to be rotatable relative to the base 102. The cleaning element 113 is designed to clean the core 109 of the optical waveguide 101. In particular, the core 109 of the optical waveguide can be cleaned of residues of the coating 108 by the cleaning element 113.

The first station 110 comprises a lever 111. The lever 111 is capable of moving relative to the base 102. The lever 111 can be rotated about the axis 104 relative to the base 102. The lever 111 can be moved from the position shown in the direction of the base 102. The lever 111 is coupled to the base 102 via the hinge 141 and the hinge 142.

The lever 111 and at least part of the base 102 form the station 110. In the exemplary embodiment illustrated, the station 110 is a cleaning apparatus for cleaning a section of the core 109 of the optical waveguide 101. A cleaning element 112 is coupled to the lever 111. The cleaning element 112 is cylindrical and capable of rotating relative to the lever 111. The cleaning element 112 is coupled to the lever 111 in such a way that, if the lever 111 is moved in the direction of the base 102, the cleaning element 112 and the cleaning element 113 are arranged adjacent to one another. The cleaning element 112 and the cleaning element 113 are designed to jointly clean at least part of the core 109 of the optical waveguide 101.

The arrangement 100 comprises a second lever 121. The lever 121 is capable of moving relative to the base 102. The lever 121 is coupled to the base 102 via the hinge 142 and the hinge 143. The lever 121 can be moved about the axis 104 relative to the base 102 in the direction of the base 102.

The lever 121 comprises a further blade (not shown), which corresponds in terms of its function to the blade 106. The blade which is arranged on the lever 121 and the blade 106 are each designed to cut into the coating 108 of the optical waveguide 101, with the result that part of the core 109 can be freed of the coating. The lever 121 and at least part of the base 102 form the actuator 120. In the exemplary embodiment shown, the actuator 120 is a stripping apparatus for removing an outer coating of a section of the at least one optical waveguide, in particular for removing a section of the coating 108.

The arrangement 100 comprises a third lever 131. The lever 131 is capable of moving relative to the base 102. The third lever 131 is coupled to the base 102 via the hinges 143 and 144. The third lever 131 is capable of rotating about the axis 104 relative to the base 102. The lever 131 can be moved in the direction of the base 102. The lever 131 forms, with at least part of the base 102, the third station 130. In the exemplary embodiment shown, the third station 130 is a cleaving apparatus for cleaving the at least one optical waveguide 101. Elements which are not explicitly shown, for example an anvil and/or clamping jaws, are arranged on the lever 131.

The first lever 111, the second lever 121 and the third lever 131 are coupled to one another via a common actuator 103. The actuator 103 couples the lever 111, the second lever 121 and the third lever 131 in such a way that, if one of the levers 111, 121, 131 is moved in the direction of the base 102, the other two of the levers 111, 121, 131 are likewise moved in the direction of the base 102.

The optical waveguide can be freed at least partly from the coating 108 with the aid of the arrangement 100. During operation, a pressure is exerted on the actuator 103 in the direction of the base 102 and, as a result, both the lever 111, the lever 121 and the lever 131 are moved in the direction of the base 102. The optical waveguide 101 is inserted into the notch 107 in a first step. The optical waveguide 101 is inserted into the notch 107 in such a way that a region of the coating 108 is in contact with the blade 106. Owing to a pressure being exerted on the actuator 103 in the direction of the base 102, the levers 111, 121 and 131 are moved in the direction of the base 102. The levers 111, 121 and 131 are moved such that the blade which is arranged on the lever 121 likewise comes into contact with the outer coating 108 of the optical waveguide 101. As a result of a further movement in the direction of the base 102, the coating 108 is cut into. Owing to the optical waveguide 101 being drawn back, the coating 108 can be removed from the core 109. Then, the levers 111, 121 and 131 can be moved into the initial position shown. The optical waveguide 101 with the partially exposed core 109 is thereupon removed from the notch 107.

In a further step, the exposed part of the core can be cleaned with the aid of the arrangement 100. The exposed part of the core 109 is positioned on the cleaning element 113 and/or the cleaning element 112. As a result of a renewed pressure being exerted on the actuator 103 in the direction of the base 102, the lever 111, the lever 121 and the lever 131 are again moved in the direction of the base 102. The levers 111, 121 and 131 are moved such that the cleaning element 112 and the cleaning element 113 have at least partial contact with the exposed part of the core 109. Owing to the optical waveguide being drawn back, the core 109 can be cleaned. In this case, the cleaning element 112 and the cleaning element 113 can rotate. A rotation of the cleaning element 112 and a rotation of the cleaning element 113 can in each case be driven by a movement of the lever 111 relative to the base 102. The cleaning element 112 is replaceable, with the result that, when it comprises become too dirty, it can be replaced by a new clean one. The cleaning element 113 is replaceable, with the result that, when it comprises become too dirty, it can be replaced by a new clean one.

The optical waveguide, in particular the exposed core 109, can be cleaved with the aid of the arrangement 100. The exposed core 109 of the optical waveguide 101 is inserted into the groove 105 in a next step. Owing to a renewed pressure exerted on the actuator 103 in the direction of the base 102, the levers 111, 121 and 131 are moved in the direction of the base 102. Owing to the movement, the optical waveguide is clamped in between the base 102 and the lever 131. A cleaving element (not shown) which is arranged on the base 102 is used to carve into the core 109 at a desired point and pressure of the anvil is used to break the core. The cleaving element is in particular a cleaving blade, which is designed to carve into at least the core 109 of the optical waveguide 101.

In one arrangement 100, both the coating 108 of the optical waveguide 101 can be removed from regions of the core 109. Thereupon, the core 109 can be cleaned by the arrangement 100. Then, the optical waveguide can be cleaved by the arrangement 100. Only the arrangement is required for the individual processing steps, and not a plurality of individual tools. The respective stations of the arrangement 100 are actuated by the common actuator 103. Both removal of the coating 108 and cleaning of the core 109 and cleaving of the optical waveguide can be implemented by the actuator 103. A movement of the actuator 103 relative to the base 102 in the direction of the base 102 actuates the operating elements 110, 120 and 130, with the result that the levers 111, 121 and 131 move uniformly in the direction of the base 102. The axis 104 about which the levers 111, 121 and 131 move is substantially parallel to the groove 105. The axis 104 is substantially parallel to the groove 107.

In the embodiment shown, the arrangement 100 comprises the three stations 110, 120 and 130. In a further embodiment, the arrangement comprises two stations, for example a stripping apparatus and a cleaning apparatus. The arrangement can additionally have another combination of stations, for example a stripping apparatus and a cleaving apparatus. In a further embodiment, the arrangement comprises more than three stations, for example four or more stations.

Figure 2 shows an arrangement 200 for processing one or more optical waveguides 201. The arrangement in accordance with the exemplary embodiment in Figure 2 corresponds substantially to the arrangement as described in connection with Figure 1. In addition, the arrangement 200 comprises a waste container 240. Further additionally, the arrangement 200 comprises a mechanism 243 for transporting a cleaved part 241, 242 of the optical waveguide 201.

The arrangement 200 comprises a base 202. A lever 211 of a first station 210 is coupled to the base 202 so as to be capable of moving about the axis 204 relative to the base 202. A cleaning element 212 is coupled rotatably to the lever 211 on the lever 211. Adjacent thereto, a cleaning element 213 is coupled to the base 202. In the exemplary embodiment shown, the actuator 210 is a cleaning apparatus, which comprises the lever 211 and the base 202.

Adjacent to the lever 211, a further lever 221 is coupled to the base 202. The lever 221 is capable of moving rotatably about the axis 204 relative to the base 202. The lever 221 comprises a blade 222. The blade 222 corresponds to a blade 206, which is arranged on the base 202. The lever 221 forms, together with the base 202, an actuating device 220, in the exemplary embodiment shown a stripping apparatus. The blades 206 and 222 can be used to cut into an outer coating 208 of the optical waveguide 201, with the result that a core 209 of the optical waveguide 201 can be exposed.

A third lever 231 is coupled to the base 202 rotatably about the axis 204 relative to the base 202. The third lever 231 is part of a third station 230. In the exemplary embodiment shown, the third station 230 is a cleaving apparatus for cleaving the optical waveguide 201. For this purpose, a cleaving element, preferably a cleaving blade 232, is arranged in the region of the lever 231 on the base 202. The cleaving blade 232 can carve into the core 209 of the optical waveguide 201. An anvil (not shown), which is arranged on the lever 231, can exert pressure on the point which comprises been carved into, with the result that the core 209 of the optical waveguide 201 breaks and the optical waveguide is thus cleaved.

The levers 211, 221 and 231 are coupled to one another via a common actuator 203. The common actuator 203 is used for actuating the station 210. The actuator 203 is used for actuating the station 220. The actuator 203 is used for actuating the station 230. Owing to a movement of the actuator 230 in the direction of the base 202, the lever 211, the lever 221 and the lever 231 are moved uniformly in the direction of the base 202. Owing to this movement, the optical waveguide can be freed from the outer coating 208 in one region by the blades 206 and 222 if it is arranged in the groove 207. Owing to a further movement of this kind, the exposed core 209 can be cleaned by the cleaning elements 212 and 213. Owing to yet a further movement of this kind, the optical waveguide can be cleaved by the cleaving blade 232, if at least the core 209 comprises been inserted in a groove 205 which runs parallel to the groove 207.

A sloping edge 245 adjoins the groove 207 in aligned fashion. The groove 207 is arranged on one side of the blade 206. The one sloping edge is arranged on the other side of the blade 206. The sloping edge 245 is at an angle in relation to the surface of the base 202. The one sloping edge 245 is arranged adjacent to the waste container 240. Part of the coating which comprises been released from the optical waveguide 201 can slide into the waste container via the sloping edge 245.

The waste container 240 is coupled to the base 202. The waste container 240 is designed to catch a plurality of cleaved parts of the optical waveguide 201. The waste container 240 can hold both the cleaved part 242 of the coating 208 and the cleaved part 241 of the core 209.

After the cleaving operation, a cleaved part of the core 209 comes to lie in the groove 205. This part of the groove 205 in which the cleaved part of the core 209 lies after the cleaving operation is adjacent to the mechanism 243. The mechanism 243 comprises a movable lever element 247. The lever element 247 is capable of rotating relative to the base 202 about an axis 244. The axis 244 runs substantially parallel to the groove 205. The axis 244 runs substantially parallel to the axis 204.

The lever element 247 is capable of moving relative to the base 202 in such a way that the cleaved part of the optical waveguide which lies in the groove 205 can be delivered to the waste container 240. For this purpose, the lever element 247 is tipped about the axis 244. The movement of the lever element 247 for transporting the cleaved part of the optical waveguide can be caused by a movement of the actuator 203. The mechanism 243 can deflect a movement of the actuator 203 into a movement of the lever element 247. In one embodiment, the actuator 203 can be moved away from the base 202 out of the rest position shown by a further actuator 246, which is coupled to the actuator 203. This movement of the actuator 203 in the direction away from the base 202 can be deflected by the mechanism 243 into a tipping movement of the lever element 247. The cleaved part of the optical waveguide which lies in the groove 205 is delivered into the waste container 240 by this movement of the actuator 203 away from the base 202. If the actuator 203 is moved away from the base 202, the lever 211, the lever 221 and the lever 231 move away from the base 202.

With one arrangement 200, both the coating 208 of the optical waveguide 201 can be removed from at least regions of the core 209. Thereupon, the core 209 can be cleaned by the arrangement 200. Then, the optical waveguide can be cleaved by the arrangement 200. A cleaved part of the optical waveguide can automatically be transported into the waste container 240.

## Claims

1. Arrangement for processing at least one optical waveguide, the arrangement comprising:
- a first station (110) for processing the at least one optical waveguide (101),
- at least one second station (120) for processing the at least one optical waveguide (101),
- the first station (110) and the at least one second station (120) comprising a common base (102), and
- the first station (110) and the at least one second station (120) comprising a common actuator (103) for simultaneously actuating the first station (110) and the at least one second station (120), the actuator (103) being movable relative to the base (102).

2. Arrangement according to Claim 1, the base (102) comprising at least one guide device (107) for the at least one optical waveguide (101) and a blade (106) for removing an outer coating (108) of a section of the at least one optical waveguide (101).

3. Arrangement according to Claim 1 or 2, the base (102) comprising a cleaning element (113) for cleaning the at least one optical waveguide (101).

4. Arrangement according to any of Claims 1 to 3, the base (102) comprising a cleaving element (232) for cleaving the at least one optical waveguide (101).

5. Arrangement according to any of Claims 1 to 4, the first station (110) and the at least one second station (120) each comprising one of the following stations:
- a stripping apparatus for removing an outer coating (108) of a section of the at least one optical waveguide (101),
- a cleaning apparatus for cleaning the section of the at least one optical waveguide (101),
- a cleaving apparatus for cleaving the at least one optical waveguide (101).

6. Arrangement according to any of Claims 1 to 5, wherein:
- the first station (110) comprises a lever (111), which is capable of moving rotatably about an axis (104) relative to the base (102),
- the second station (120) comprises a further lever (121), which is capable of moving rotatably about the axis (104) relative to the base (102), and in which
- the axis (104) is fixed relative to the base (102).

7. Arrangement according to Claim 6, the lever (111) and the further lever (121) being coupled to the common actuator (103), such that a movement of the common actuator (103) relative to the base (103) causes an uniform movement of the lever (111) and the further lever (121) relative to the base (102).

8. Arrangement according to Claim 6 or 7, the longitudinal direction of the lever (111) and the longitudinal direction of the further lever (121) being in the same direction.

9. Arrangement according to any of Claims 6 to 8, the base (102) comprising a plurality of hinges (141, 142, 143, 144), wherein:
- the lever (111) and the further lever (121) are coupled to the base in each case via at least two hinges (141, 142; 142, 143) of the plurality of hinges (141, 142, 143, 144), and
- the axis (104) runs through the plurality of hinges (141, 142, 143, 144).

10. Arrangement according to any of Claims 6 to 9, the axis (104) running along the longitudinal direction of the at least one optical waveguide (101).

11. Arrangement according to any of Claims 1 to 10, comprising:
- a waste container (240) for holding at least one cleaved part (241; 242) of the at least one optical waveguide, the waste container being coupled to the base (102; 202).

12. Arrangement according to Claim 11, comprising:
- a mechanism (243) for transporting the at least one cleaved part (241) into the waste container (240).

13. Arrangement according to any of Claims 1 to 12, comprising:
- a further actuator (246) for actuating the mechanism (243) for transporting the at least one cleaved part (241), the further actuator being coupled to the actuator (103; 203).

14. Arrangement according to any of Claims 1 to 13, comprising:
- at least one third station (130) for processing optical waveguides, and wherein:
- the first station (110), the at least one second station (120) and at least one third station (130) comprise the common base (102),
- the common actuator (103) for simultaneously actuating the first station (110), the at least one second station (120) and the at least one third station (130) coupling the first station (110), the at least one second station (120) and the at least one third station (130) and
- the first station (110) comprises a stripping apparatus,
- the second station (120) comprises a cleaning apparatus, and
- the third station (130) comprises a cleaving apparatus, such that
- the stripping apparatus, the cleaning apparatus and the cleaving apparatus are actuatable uniformly by the actuator (103).
